# EUROPEAN PATENT APPLICATION

(11) **EP 3 964 367 A1**
(43) Date of publication of application: **09.03.2022**
(21) Application number: 20823529.1
(22) Date of filing: 01.06.2020
(51) Int. Cl.: B44C 1/165

(54) **METHOD FOR DECORATING DISHWARE BY WAY OF TRACING**

(30) Priority: 12.06.2019 ES 201930538
(71) Applicant: Torrecid, S.A., 12110 Alcora (Castellón) (ES)
(72) Inventor: RUIZ VEGA, Óscar, 12110 Alcora (Castellón) (ES); BRUGADA SECO, Laura, 12110 Alcora (Castellón) (ES); CONCEPCIÓN HEYDORN, Carlos, 12110 Alcora (Castellón) (ES); CORTS RIPOLL, Juan Vicente, 12110 Alcora (Castellón) (ES)
(74) Representative: Carlos Hernando, Borja
(86) International application number: PCT/ES2020/070360
(87) International publication number: WO 2020/249839

(57) **Abstract**

The invention relates to a method for decorating, by way of decal, dishware products that have previously been glazed and fired, using inkjet inks, which is characterised in that it comprises the step of applying a composition 1 that does not include frits and a composition 2 that always includes at least one frit, an inkjet ink having no frit in its composition also being used, thereby achieving suitable adhesion, dishwasher-test resistance, colorimetric intensity and aesthetic effect.

## Description

The present invention is comprised in the field of decorating dishware that has previously been glazed and fired, using decals and decorating them with inkjet inks by means of technology referred to as drop-on-demand (DoD), subjected to thermal treatment comprised between 850°C and 1400°C.

### STATE OF THE ART

The sector of dishware decorated through employment of decal is made up of different types of products, such as, for example, porcelain, stoneware, bone china and earthenware. Likewise, different decorating methodologies are distinguished, such as direct screen printing, paintbrush, or decal. In the case of decorating by means of decal, the method used in the state of the art consists of using decal paper on which the ink or inks forming the decoration are deposited. Subsequently, a cover coat is deposited on the decoration by means of screen printing and is left to dry for a time which may reach up to 48 hours. Next, the decal paper with the decoration and the cover coat are introduced in a water bath, which causes the decoration and the cover coat to become detached from the decal paper. Finally, the set of decoration and cover coat is deposited on the dishware product to be decorated and subjected to the corresponding firing cycle. However, this method has the limitation that it is necessary for the inks or pastes used for decorating to contain frit in their formulation in order to achieve correct adhesion and integration of the ink into the glaze of the dishware product. However, when inkjet inks with frit in their formulation are used, it has been observed that the colouring and effects that are achieved do not meet the requirements in terms of colorimetric coordinates (La*b* values) or final decorative effect (glossiness, matte, lustre, metallic, etc.).

In the current state of the art, there are other solutions for decorating dishware by means of screen printing on decal. In that sense, patent application US2018/0297393 is intended for obtaining a low-temperature decoration by means of using non-leafing pigments applied by means of screen printing on the decal so as to obtain either a metallic effect, using pigments with an aluminium, brass, or bronze effect, or else a colorimetric effect, using organic pigments. The method for decorating the decal according to application US2018/0297393 consists of the screen printing of a first layer referred to as the protective layer on the decal paper, followed by printing, also by screen printing, of a coat containing the non-leafing pigments, and another protective layer is applied on this second layer also by means of screen printing. Preferably the decal paper is characterised in that it contains dextrin or polyvinyl alcohol. Particularly in the decoration of plastics, it also describes the application of a bonding layer on the coat containing the non-leafing pigments by means of screen printing for the purpose of achieving adherence. In the case of decorating ceramic and glass, in addition to decal, it needs the application of silanes on the surface on which the decal is to be deposited so as to achieve adherence and integration. However, said patent application US2018/0297393 does not describe the use of frits in the protective layer. Furthermore, the application of silanes on the ceramic and glass to be decorated originates changes in hue and problems of incompatibility with inks which translates into defects in the final decoration.

In turn, patent EP3037451 B1 provides a method of preparing a paste for decorating by means of screen printing by way of decal which allows obtaining metallic effects on glass and ceramic. The paste for decal comprises precious metals together with at least one binding composition in a percentage by weight comprised between 17% and 27%. The binding composition comprises a mixture of at least one polyamine and an epoxy compound, at least one solvent selected from an organic C₁-C₁₀ monocarboxylic acid or an aprotic polar solvent of the cyclohexanone or cyclohexanol type or a combination thereof. Additionally, the preparation of the binding composition requires a step of heating at a temperature comprised between 140°C and 200°C for a time between 5 minutes and 20 minutes. The method for decorating, as described in patent EP3037451 B1, consists of a single application of the paste on the decal paper substrate with a screen printing screen of 120 threads/cm². However, patent EP3037451 B1 does not describe the use of frits in the binding composition which, as is known in the state of the art, would prevent the application thereof in a decoration with inkjet inks which contain inorganic pigments or raw materials, since adhesion of the decoration to the substrate to be decorated is not achieved as integration of the pigments or raw materials is not performed.

The state of the art also includes patent application US2015/0038616 which describes an ink composition for application by means of inkjet intended for the direct decoration (without the use of decal) of non-porous substrates comprising organic solvents, at least one glass frit of submicrometric size and at least one ceramic pigment. The fact that this application is intended for direct decoration prevents its application for decorating by way of decal. In this sense, it has been observed that when the decal is decorated with these inks according to the methods used in the state of the art, the final effect is not good given that part of the colorimetric intensity or aesthetic effect that is desired (glossiness, matte, lustre, metallic, etc.) is lost.

The purpose of the present invention is to provide a method and compositions which do not present the problems described above, that is, a method in which by using an inkjet ink without frit, suitable adhesion, colorimetric intensity and aesthetic effect are achieved as a result of the prior application of composition 1, which does not include frits, and composition 2 which always includes at least one frit, and the subsequent application of composition 1; compositions 1 and 2 performed as claimed herein. Method and compositions overcoming the problems described above and derived from the use of an inkjet ink with frit or from the use of the method for decorating by way of decal existing in the state of the art.

Another further advantage is that the method and compositions according to the invention are characterised by overcoming the dishwasher washing resistance test according to standard ASTM3565.

Yet another further advantage is that the inkjet inks without frit used in the method according to the invention are made in a shorter time, are more economical, require less energy for the production thereof and are more environmentally friendly.

### DISCLOSURE OF THE INVENTION

Throughout the specification and claims, the word "comprises" and variants thereof do not intend to exclude other technical features, additives, components, or steps. Furthermore, the word "comprises" includes the case of "consists of". For those skilled in the art, other objects, advantages and features of the invention will be inferred in part from the description and in part from putting the invention into practice.

The present invention is a method for decorating, by way of decal, dishware products that have previously been glazed and fired, using inkjet inks, characterised in that it comprises the following steps:
a) Applying on a decal paper by means of screen printing a composition 1 comprising at least one binder in a percentage by weight comprised between 35% and 45%, at least one solvent in a percentage by weight comprised between 55% and 65% and an antifoaming agent in a percentage by weight comprised between 0.25% and 1%.
b) Drying at a temperature comprised between 25°C and 40°C for a time comprised between 1 hour and 48 hours.
c) Applying by means of screen printing a composition 2, on composition 1 previously applied, comprising at least one binder in a percentage by weight comprised between 15% and 25%, at least one solvent in a percentage by weight comprised between 35% and 45%, at least one frit in a percentage by weight comprised between 30% and 40%, with a D100 particle size of 45 micrometres, with a softening temperature comprised between 875°C and 950°C and a coefficient of thermal expansion between 25°C and 500°C, comprised between 40°C⁻¹ and 70°C⁻¹.
d) Drying at a temperature comprised between 25°C and 40°C for a time comprised between 1 hour and 48 hours.
e) Printing, on composition 2, by means of inkjet technology, at least one ink not including frit in its composition.
f) Applying, by means of screen printing, composition 1 on the at least one ink, forming on the decal paper an application unit comprising the set of previous applications formed by composition 1, plus composition 2, plus the ink and plus composition 1.
g) Drying at a temperature comprised between 25°C and 50°C for a time comprised between 1 hour and 48 hours.
h) Introducing the decal paper with the application unit in a water bath at a temperature comprised between 25°C and 50°C, for a time comprised between 1 minute and 10 minutes.
i) Separating the application unit from the decal paper as a whole unit.
j) Drying at a temperature comprised between 25°C and 40°C for a time comprised between 1 hour and 48 hours.
k) Depositing the application unit on the dishware product that has been previously glazed and fired.
l) Performing a thermal treatment at a temperature comprised between 850°C and 1400°C.

The term "frit" as it is used herein relates to a mixture of inorganic compounds subjected to a melting and subsequent cooling process to obtain an amorphous glassy compound, i.e., without a crystalline structure, and the composition of which is expressed in the form of an oxide.

According to the present invention, the binder used in compositions 1 and 2 is selected from the group comprising glycol acrylates, polyalkyl acrylates, polyalkyl acrylate copolymers, dialkyl acrylate copolymers, or a mixture thereof.

Another aspect of the present invention is that the solvent used in compositions 1 and 2 is selected from the group comprising 1-butanol, 2-methyl-2-propanol, 1,5-pentanediol, 1-octanol, 1-4-butanediol, water, ethylene glycol, alkanes, naphthenic solvents, aromatic hydrocarbons, or a mixture thereof.

According to the present invention, the composition also comprises an antifoaming agent in a percentage by weight comprised between 0.25% and 1%, and it is selected from the group comprising polysiloxanes, polyether-modified polysiloxanes, modified silicones, polydimethylsiloxanes, mineral oil derivatives and fatty acid derivatives.

When applying formulations by means of screen printing, the amount of composition deposited is controlled by the number of threads per cm² contained in the screen printing screen. In this sense, the printing method according to the present invention contemplates the screen printing screen used for applying composition 1 having between 36 threads/cm² and 68 threads/cm². In turn, the screen printing screen for applying composition 2 according to the method of the present invention has between 21 threads/cm² and 36 threads/cm².

According to the present invention, the decoration by way of decal is performed using inks which are applied by means of DoD inkjet technology. In this sense, the amount of ink deposited according to the invention is comprised between 1 g/m² and 35 g/m². Furthermore, the inks can provide different decorative effects. Examples of decorative effects that can be obtained according to the invention, by way of an illustrative and nonlimiting example, are colour, glossiness, matte, shine, lustre, metallic, relief, micro-relief, among others.

Another aspect of the present invention relative to the inks is that the ink applied according to the method for decorating contains at least one inorganic compound which is selected from the group comprising ceramic pigment or raw material or else a mixture thereof. Additionally, the raw material is selected from the group comprising Al₂O₃, quartz, ZnO, WO₃, Fe₂O₃, ZrSiO₄, sodium feldspar, potassium feldspar, lithium feldspar, nepheline, mullite, wollastonite, kaolinite clay, illite clay, bentonites or else a mixture thereof.

### DESCRIPTION OF THE FIGURES

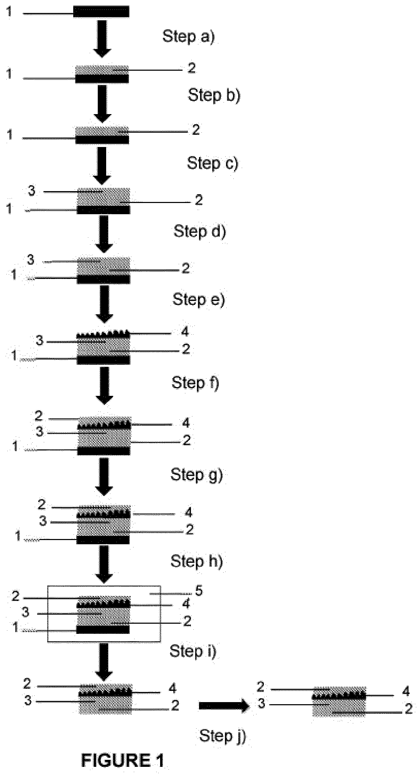

Figure 1 is a diagram of the method for decorating, by way of decal, dishware products that have previously been glazed and fired, using inkjet inks according to the invention.

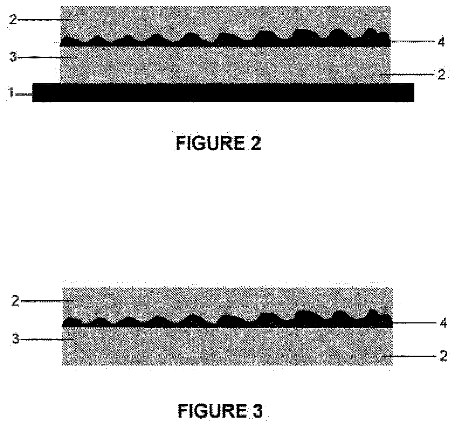

Figure 2 depicts the decal paper (1) with the application unit, made up of composition 1 (2), composition 2 (3) and ink without frit (4) before being immersed in a water bath (5).
Figure 3 depicts the application unit, made up of composition 1 (2), composition 2 (3) and ink without frit (4) separated from the decal paper (1) and ready to be deposited on the dishware product that has been previously glazed and fired.

### PREFERRED EMBODIMENTS

The following examples are provided by way of illustration and do not intend to be limiting of the present invention. Furthermore, the present invention covers all the possible combinations of particular and preferred embodiments indicated herein.

The dishware products obtained in each example were subjected to colorimetric evaluation of the CIE La*b* colour space by means of a spectrophotometer. The La*b* measurement was defined by the *Commission Internationale de l'Éclairage* (CIE), an organisation regarded as a reference in light science, to communicate and express the colour objectively. The La*b* colour space is widely used because it correlates numerical colour values with human visual perception. The La*b* colour space measurement is based on an opposing colour theory which establishes that two colours cannot be red and green at the same time, or yellow and blue at the same time. From that, L is defined as luminosity, which ranges from 0 (absence of luminosity) to 100 (complete luminosity), a* as the red/green coordinates, where positive values of a* indicate red and negative values represent green, and b* as the yellow/blue coordinates, where positive values of b* indicate yellow and negative values of b* indicate blue. Spectrophotometers and colorimeters can quantify the three colour variables.

Next, the dishware products obtained in each example were subjected to a dishwasher resistance test according to standard ASTM-D-3565. Said standard establishes five assessment scales for assessing the final product once it has been subjected to the accelerated aging test in which the dishware is vigorously rubbed with a muslin:
0: no product alteration occurs, no loss of pigment due to rubbing or deterioration or loss of lustre.
1: light: traces of pigment in the fabric; slight loss or matting, first recognisable evidence of alteration.
2: moderate: pigment noticeable in the fabric; obvious loss or matting.
3: considerable: extensive pigment on the fabric; extensive removal of pigment.
4: complete: essentially complete removal of pigment after rubbing.

### Example 1. Decoration of bone china dishware.

Bone china dishware products were decorated by means of the method according to the present invention. In turn, two types of inkjet inks were used. One type consisted of four inkjet inks (4) corresponding to the colours cyan (CI), magenta (MI), yellow (YI) and black (KI) and with the characteristic that they did not contain frit in their formulation. The other type corresponded to a set of four inkjet inks corresponding to the colours cyan (CFI), magenta (MFI), yellow (YFI) and black (KFI) and with the characteristic that they did contain frit in their formulation.

In turn, the method for decorating used with the two sets of inks, according to the present invention, comprised the following steps:
a) Applying on a decal paper (1) by means of screen printing, using a screen of 68 threads/cm², a composition 1 (2) comprising a glycol acrylate binder in a percentage by weight of 4%, a polyalkyl acrylate binder in a percentage by weight of 39%, 1-butanol in a percentage by weight of 6.5%, xylene in a percentage by weight of 50% and a polysiloxane antifoaming agent in a percentage by weight of 0.5%.
b) Drying at a temperature of 45°C for 12 hours.
c) Applying by means of screen printing, using a screen of 36 threads/cm², on composition 1 (2), a composition 2 (3) comprising a glycol acrylate binder in a percentage by weight of 2%, a polyalkyl acrylate binder in a percentage by weight of 19.5%, a naphthenic solvent in a percentage by weight of 40%, a frit in a percentage by weight of 38.5%, with a D100 particle size of 45 micrometres, with a softening temperature of 885°C and a coefficient of thermal expansion between 25°C and 500°C of 43°C⁻¹.
d) Drying at a temperature of 35°C for 12 hours.
e) Printing on composition 2 (3), in an alternating manner, each of the two sets of inkjet inks, one without frit (4) and the other with frit. In both cases, the deposited amount of each ink was 20 g/m².
f) Applying, by means of screen printing, composition 1 (2), using a screen of 68 threads/cm² on each of the printed sets of inks, giving rise to an application unit comprising the four previous applications, namely, composition 1 (2), composition 2 (3), the ink (4) and again composition 1 (2).
g) Drying at a temperature of 50°C for 8 hours.
h) Introducing the decal paper (1) with the application unit set in a water bath (5) at a temperature of 25°C, for 7 minutes.
i) Separating the application unit from the decal paper (1) as a whole unit.
j) Drying at a temperature of 40°C for 24 hours.
k) Depositing each of the application units on respective dishware products that have previously been glazed and fired.
l) Performing thermal treatment in both cases at a maximum temperature of 1100°C.

Once the dishware products with the corresponding decorations using the two sets of inks have been fired, a measurement of the La*b* colorimetric coordinates was taken. The data is shown in the following table. It can be observed that the colorimetric results or final decorative effect in the case of inks without frit are better than inks with frit using the method described in the present invention.

**Table 1**

| | Ink without frit | | | | Ink with frit | | | |
|---|---|---|---|---|---|---|---|---|
| | CI | MI | YI | KI | CFI | MFI | YFI | KFI |
| L | 46.54 | 57.12 | 81.73 | 16.60 | 51.93 | 51.84 | 76.85 | 26.00 |
| a* | 20.13 | 33.31 | 7.88 | 0.30 | -11.03 | 11.26 | 10.76 | 2.92 |
| b* | -47.31 | 8.09 | 58.85 | -2.57 | -19.48 | 18.73 | 40.03 | -0.83 |

Finally, the resulting dishware products were subjected to a dishwasher resistance test according to standard ASTM-D-3565. The following table shows the result obtained in each ink composition, where it can be observed that the test is passed in all cases.

| | Without frit | | | | With frit | | | |
|---|---|---|---|---|---|---|---|---|
| Dishwasher resistance test (standard ASTM-D3565) | CI | MI | YI | KI | CFI | MFI | YFI | KFI |
| Result | 0 | 0 | 0 | 0 | 0 | 0 | 0 | 0 |

### Example 2. Decoration of porcelain dishware.

Porcelain dishware products were decorated by means of the method according to the present invention. In turn two types of inkjet inks were used. One type consisted of four inkjet inks corresponding to the colours cyan (CI), magenta (MI), yellow (YI) and black (KI) and with the characteristic that they did not contain frit in their formulation (4). The other type corresponded to a set of four inkjet inks corresponding to the colours cyan (CFI), magenta (MFI), yellow (YFI) and black (KFI) and with the characteristic that they did contain frit in their formulation.

In turn, the method for decorating used with the two sets of inks, according to the present invention, comprised the following steps:
a) Applying on a decal paper (1) by means of screen printing, using a screen of 36 threads/cm², a composition 1 (2) comprising a glycol acrylate binder in a percentage by weight of 4.5%, a dialkyl acrylate copolymer binder in a percentage by weight of 35%, 1,5-pentanediol in a percentage by weight of 10%, naphthenic solvent in a percentage by weight of 50% and a polyether-modified polysiloxane antifoaming agent, in a percentage by weight of 0.5%.
b) Drying at a temperature of 25°C for 48 hours.
c) Applying by means of screen printing, using a screen of 36 threads/cm², a composition 2 (3) comprising a glycol acrylate binder in a percentage by weight of 5%, a polyalkyl acrylate binder in a percentage by weight of 20%, 2-methyl-2-propanol in a percentage by weight of 5%, ethylene glycol in a percentage by weight of 35%, water in a percentage by weight of 5%, a frit in a percentage by weight of 30%, with a D100 particle size of 45 micrometres, with a softening temperature of 950°C and a coefficient of thermal expansion between 25°C and 500°C of 70°C⁻¹.
d) Drying at a temperature of 40°C for 8 hours.
e) Printing on composition 2 (3), in an alternating manner, each of the two sets of inkjet inks, one without frit (4) and the other with frit. In both cases, the deposited amount of each ink was 30 g/m².
f) Applying, by means of screen printing, composition 1 (2), using a screen of 68 threads/cm² on each of the printed sets of inks, giving rise to an application unit comprising the four previous applications, namely, composition 1 (2), composition 2 (3), the ink (4) and again composition 1 (2).
g) Drying at a temperature of 40°C for 48 hours.
h) Introducing the decal paper (1) with the previous application unit set in a water bath (5) at a temperature of 30°C for 10 minutes.
i) Separating the application unit from the decal paper (1) as a whole unit.
j) Drying at a temperature of 40°C for 48 hours.
k) Depositing each of the application units on respective dishware products that have previously been glazed and fired.
l) Performing thermal treatment in both cases at a maximum temperature of 1180°C.

Once the dishware products with the corresponding decorations using the two sets of inks have been fired, a measurement of the La*b* colorimetric coordinates was taken. The data is shown in the following table. It can be observed that the colorimetric results or final decorative effect in the case of inks without frit are better than inks with frit using the method described in the present invention

**Table 2**

| | Ink without frit | | | | Ink with frit | | | |
|---|---|---|---|---|---|---|---|---|
| | CI | MI | YI | KI | CFI | MFI | YFI | KFI |
| L | 34.06 | 58.42 | 75.81 | 15.47 | 58.96 | 49.73 | 79.14 | 13.42 |
| a* | 19.52 | 34.13 | -0.99 | 0.77 | 7.16 | 9.05 | 10.76 | 1.02 |
| b* | -48.95 | 8.89 | 45.87 | -1.97 | -30.76 | 10.01 | 40.03 | -2.58 |

Finally, the resulting dishware products were subjected to a dishwasher resistance test according to standard ASTM-D-3565. The following table shows the result obtained in each ink composition, where it can be observed that the test is passed in all cases.

| | Without frit | | | | With frit | | | |
|---|---|---|---|---|---|---|---|---|
| Dishwasher resistance test (standard ASTM-D3565) | CI | MI | YI | KI | CFI | MFI | YFI | KFI |
| Result | 0 | 1 | 0 | 0 | 0 | 1 | 0 | 0 |

### Example 3. Decoration of porcelain dishware at a low temperature.

Porcelain dishware products were decorated at a low temperature by means of the method according to the present invention. In turn, two types of inkjet inks were used. One type consisted of four inkjet inks corresponding to the colours cyan (CI), magenta (MI), yellow (YI) and black (KI) and with the characteristic that they did not contain frit in their formulation (4). The other type corresponded to a set of four inkjet inks corresponding to the colours cyan (CFI), magenta (MFI), yellow (YFI) and black (KFI) and with the characteristic that they did contain frit in their formulation.

In turn, the method for decorating used with the two sets of inks, according to the present invention, comprised the following steps:
a) Applying on a decal paper (1) by means of screen printing, using a screen of 68 threads/cm², a composition 1 (2) comprising a dialkyl acrylate copolymer binder in a percentage by weight of 22%, a polyalkyl acrylate binder in a percentage by weight of 20%, ethylene glycol in a percentage by weight of 55%, 1-octanol in a percentage by weight of 2.5% and a polydimethylsiloxane antifoaming agent in a percentage by weight of 0.5%.
b) Drying at a temperature of 40°C for 24 hours.
c) Applying by means of screen printing, using a screen of 21 threads/cm², a composition 2 (3) comprising a glycol acrylate binder in a percentage by weight of 5%, a polyalkyl acrylate binder in a percentage by weight of 10%, a naphthenic solvent in a percentage by weight of 10%, xylene in a percentage by weight of 35%, a frit in a percentage by weight of 25%, with a D100 particle size of 45 micrometres, with a softening temperature of 875°C and a coefficient of thermal expansion between 25°C and 500°C of 40°C⁻¹, a second frit in a percentage by weight of 15%, with a D100 particle size of 45 micrometres, with a softening temperature of 925°C and a coefficient of thermal expansion between 25°C and 500°C of 66°C⁻¹.
d) Drying at a temperature of 30°C for 48 hours.
e) Printing on composition 2 (3), in an alternating manner, each of the two sets of inkjet inks, one without frit (4) and the other with frit. In both cases, the deposited amount of each ink was 35 g/m².
f) Applying, by means of screen printing, composition 1 (2) on each of the printed sets of inks, using a screen of 36 threads/cm², giving rise to an application unit comprising the four previous applications, namely, composition 1 (2), composition 2 (3), the ink (4) and again composition 1 (2).
g) Drying at a temperature of 50°C for 12 hours.
h) Introducing the decal paper (1) with the previous application unit set in a water bath (5) at a temperature of 25°C for 5 minutes.
i) Separating the application unit from the decal paper (1) as a whole unit.
j) Drying at a temperature of 30°C for 12 hours.
k) Depositing each of the application units on respective dishware products that have previously been glazed and fired.
l) Performing thermal treatment in both cases at a maximum temperature of 850°C.

Once the dishware products with the corresponding decorations using the two sets of inks have been fired, a measurement of the La*b* colorimetric coordinates was taken. The data is shown in the following table. It can be observed that the colorimetric results or final decorative effect in the case of inks without frit are better than inks with frit using the method described in the present invention

**Table 3**

| | Ink without frit | | | | Ink with frit | | | |
|---|---|---|---|---|---|---|---|---|
| | CI | MI | YI | KI | CFI | MFI | YFI | KFI |
| L | 48.07 | 60.42 | 80.06 | 17.06 | 53.10 | 60.17 | 84.03 | 22.63 |
| a* | 5.02 | 32.21 | 7.24 | 0.67 | 7.23 | 10.79 | -1.05 | -1.35 |
| b* | -55.12 | 9.52 | 55.52 | -2.03 | 45.96 | 19.07 | 44.73 | -2.37 |

The resulting dishware products were subjected to a dishwasher resistance test according to standard ASTM-D-3565. The following table shows the result obtained in each ink composition, where it can be observed that the test is passed in all cases.

| | Without frit | | | | With frit | | | |
|---|---|---|---|---|---|---|---|---|
| Dishwasher resistance test (standard ASTM-D3565) | CI | MI | YI | KI | CFI | MFI | YFI | KFI |
| Result | 0 | 0 | 0 | 0 | 0 | 0 | 0 | 0 |

## Claims

1. A method for decorating, by means of decal (1), dishware products that have previously been glazed and fired, using inkjet inks, **characterised in that** it comprises the following steps:
a) Applying on a decal paper (1), by means of a screen printing screen, a composition 1 (2) comprising at least one binder in a percentage by weight comprised between 35% and 45%, at least one solvent in a percentage by weight comprised between 55% and 65% and an antifoaming agent in a percentage by weight comprised between 0.25% and 1%.
b) Drying at a temperature comprised between 25°C and 40°C for a time comprised between 1 hour and 48 hours.
c) Applying, by means of a screen printing screen, a composition 2 (3), on composition 1 (2) previously applied, comprising at least one binder in a percentage by weight comprised between 15% and 25%, at least one solvent in a percentage by weight comprised between 35% and 45%, at least one frit in a percentage by weight comprised between 30% and 40%, with a D100 particle size of 45 micrometres, with a softening temperature comprised between 875°C and 950°C and a coefficient of thermal expansion, between 25°C and 500°C, comprised between 40°C⁻¹ and 70°C⁻¹.
d) Drying at a temperature comprised between 25°C and 40°C for a time comprised between 1 hour and 48 hours.
e) Printing, on composition 2 (3), by means of inkjet technology, at least one ink (4) not including frit in its composition.
f) Applying, by means of a screen printing screen, composition 1 (2) on the at least one ink (4), giving rise to an application unit comprising the four previous applications, namely, composition 1 (2), composition 2 (3), ink (4) and composition 1 (2) again.
g) Drying at a temperature comprised between 25°C and 50°C for a time comprised between 1 hour and 48 hours.
h) Introducing the decal paper (1) with the application unit set in a water bath (5) at a temperature comprised between 25°C and 50°C for a time comprised between 1 minute and 10 minutes.
i) Separating the application unit from the decal paper (1) as a whole unit.
j) Drying at a temperature comprised between 25°C and 40°C for a time comprised between 1 hour and 48 hours.
k) Depositing the application unit on the dishware product that has been previously glazed and fired.
l) Performing a thermal treatment at a temperature comprised between 850°C and 1400°C.

2. The method according to claim 1, wherein the binder of compositions 1 and 2 is selected from the group comprising glycol acrylates, polyalkyl acrylates, polyalkyl acrylate copolymers, dialkyl acrylate copolymers, or a mixture thereof.

3. The method according to any of the preceding claims, wherein the solvent of compositions 1 and 2 is selected from the group comprising 1-butanol, 2-methyl-2-propanol, 1,5-pentanediol, 1-octanol, 1-4-butanediol, water, ethylene glycol, alkanes, naphthenic solvents, aromatic hydrocarbons, or a mixture thereof.

4. The method according to any of the preceding claims, wherein the antifoaming agent of composition 1 is selected from the group comprising polysiloxanes, polyether-modified polysiloxanes, modified silicones, polydimethylsiloxanes, mineral oil derivatives and fatty acid derivatives.

5. The method according to any of the preceding claims, wherein the screen printing screen for applying composition 1 (2) has between 36 threads/cm² and 68 threads/cm².

6. The method according to any of the preceding claims, wherein the screen printing screen for applying composition 2 (3) has between 21 threads/cm² and 36 threads/cm².

7. The method according to any of the preceding claims, wherein the deposited amount of the at least one ink (4) by means of inkjet technology is comprised between 1 g/m² and 35 g/m².

8. The method according to any of the preceding claims, wherein the ink printed by means of inkjet contains at least one inorganic compound which is selected from the group comprising ceramic pigment or raw material or a mixture thereof.

9. The method according to the preceding claim, wherein the raw material is selected from the group comprising Al₂O₃, quartz, ZnO, WO₃, Fe₂O₃, ZrSiO₄, soda feldspar, potassium feldspar, lithium feldspar, nepheline, mullite, wollastonite, kaolinite clay, illite clay, bentonites, or a mixture thereof.

10. The method according to claim 1, wherein the obtained dishware product obtains a scale of 0 or 1 in the dishwasher resistance test according to standard ASTM-D-3565.
